# FASCICULE DE BREVET EUROPEEN

(11) **EP 4 425 979 B1**
(45) Date de publication et mention de la délivrance du brevet: **05.11.2025**
(21) Numéro de dépôt: 24158829.2
(22) Date de dépôt: 21.02.2024
(51) Int. Cl.: H04W 12/04, H04L 9/40, H04W 4/40, H04W 4/80, H04W 12/06, H04W 12/50

(54) **PROCÉDÉS D'ÉTABLISSEMENT D'UNE CONNEXION SÉCURISÉE ENTRE UN VÉHICULE ET UN TERMINAL UTILISATEUR ET DISPOSITIFS ASSOCIÉS**
VERFAHREN ZUR HERSTELLUNG EINER SICHEREN VERBINDUNG ZWISCHEN EINEM FAHRZEUG UND EINEM BENUTZERENDGERÄT UND VORRICHTUNGEN DAFÜR
METHODS FOR ESTABLISHING A SECURE CONNECTION BETWEEN A VEHICLE AND A USER TERMINAL AND ASSOCIATED DEVICES

(30) Priorité: 28.02.2023 FR 2301844
(43) Date de publication de la demande: 04.09.2024
(73) Titulaire: IDEMIA France, 92400 Courbevoie (FR)
(72) Inventeur: UGLIETTI, Gianni, 92400 COURBEVOIE (FR); LETELLIER, Bruno, 92400 COURBEVOIE (FR)
(74) Mandataire: Idemia

(56) Documents cités:
- JP-A- 2012 193 508
- JP-A- 2020 142 584
- US-A1- 2019 299 930

## Description

### DOMAINE DE L'INVENTION

L'invention concerne la mise en place d'une connexion sécurisée entre deux dispositifs, en particulier dans le domaine automobile.

### ETAT DE LA TECHNIQUE

Des constructeurs de véhicules lancent des services de clés numériques (également connus sous le nom de « *phone-as-a-key services* ») afin de remplacer les clés traditionnelles par un terminal tel qu'un téléphone portable. Le terminal peut ainsi être utilisé par exemple pour déverrouiller une porte d'un véhicule ou démarrer le moteur du véhicule.

Pour réaliser ces fonctions, le terminal communique avec un équipement du véhicule, généralement appelé ECU, via un canal sécurisé.

Avant que le canal sécurisé ne soit établi, il a été proposé un procédé comprenant les étapes suivantes : un serveur génère un premier secret et un deuxième secret, le serveur transmet le premier secret à l'ECU, et le deuxième secret au terminal. Le terminal et l'ECU vérifient conjointement si le premier secret et le deuxième secret sont liés par une relation mathématique prédéfinie. Le canal sécurisé n'est établi que dans la positive.

L'ECU étant embarqué dans un véhicule, l'ECU reçoit généralement le premier secret par un réseau de communication radio sans fil. Or, une telle solution peut s'avérer difficile à mettre en oeuvre dans le cas où la couverture réseau de l'ECU est faible, par exemple en zone blanche, et/ou dégradée, par exemple dans un garage en sous-sol. Le document JP 2012 193508 est un document pertinent dans le domaine des services de clés numériques.

### EXPOSE DE L'INVENTION

Un but de l'invention est donc de mettre en place une connexion sécurisée hors-ligne entre le dispositif de télécommunication et le véhicule lorsque l'unité de contrôle du véhicule ne peut pas recevoir le premier secret par le serveur.

À cet effet, on prévoit selon l'invention un procédé d'initialisation d'une connexion sécurisée conforme à la revendication 1, et un ensemble conforme à la revendication 5.

Dans l'invention, le dispositif joue le rôle de relai dans la communication entre le serveur et le véhicule. Ceci permet à l'unité de contrôle du véhicule de recevoir le premier secret même lorsque l'unité de contrôle se trouve dans une zone empêchant des communications radio directes entre le serveur et l'unité de contrôle, tel qu'un garage en sous-sol. En effet, le dispositif, ayant préalablement reçu le premier secret, peut transmettre, à l'unité de contrôle du véhicule, ce premier secret, étant donnée leur proximité mutuelle.

On peut prévoir que le premier secret est un vérificateur de mot de passe configuré pour autoriser l'établissement du canal de communication sécurisé entre l'unité de contrôle du véhicule et le terminal utilisateur à condition qu'un mot de passe candidat transmis par le terminal utilisateur à l'unité de contrôle du véhicule corresponde au deuxième secret.

On peut prévoir que la transmission du premier secret du dispositif à l'unité de contrôle du véhicule comprend :
- une communication en champ proche (NFC), ou
- une lecture optique, par l'unité de contrôle du véhicule, d'un motif représentatif du premier secret et affiché par le dispositif, le motif étant par exemple un code barre ou un QR code.

On peut prévoir que le dispositif est une carte à puce.

### DESCRIPTION DES FIGURES

Nous allons maintenant présenter un mode de réalisation de l'invention à titre d'exemple non-limitatif à l'appui des dessins sur lesquels :
la figure 1 illustre de façon schématique des communications en champ proche entre l'unité de contrôle du véhicule et le terminal utilisateur ;
la figure 2 illustre une cartographie des échanges entre un système, un dispositif et une unité de contrôle du véhicule avant un premier démarrage du véhicule ;
la figure 3 illustre une cartographie des échanges entre le système, le dispositif, l'unité de contrôle du véhicule et le terminal utilisateur après le premier démarrage du véhicule ; et
la figure 4 est un logigramme d'un mode de mise oeuvre du procédé selon l'invention.

### DESCRIPTION DETAILLEE DE L'INVENTION

### Dispositifs

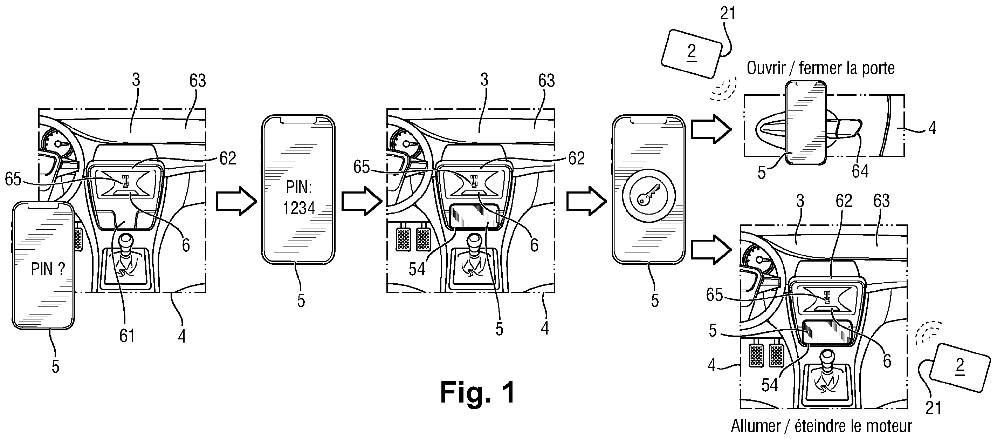

En référence à la figure 1, un véhicule 4 comprend un lecteur interne 6 et une unité de contrôle 3.

Le lecteur interne 6 comprend :
- une première interface de communication 61 configurée pour recevoir des données par exemple via une communication en champ proche, par exemple de type NFC (NFC pour « *Near Field Communication* » en terminologie anglo-saxonne) ou Bluetooth, avec un terminal utilisateur 5 et/ou un dispositif 2 ; et
- une deuxième interface de communication 62 configurée pour transmettre des données avec l'unité de contrôle 3 du véhicule 4.

La première interface de communication 61 peut par exemple se trouver dans l'habitacle 63 du véhicule, ou bien au niveau de la portière 64, ou les deux

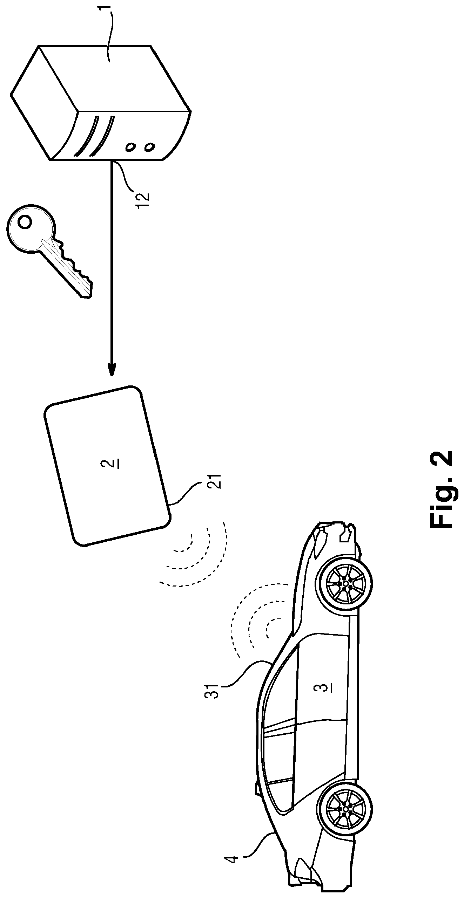

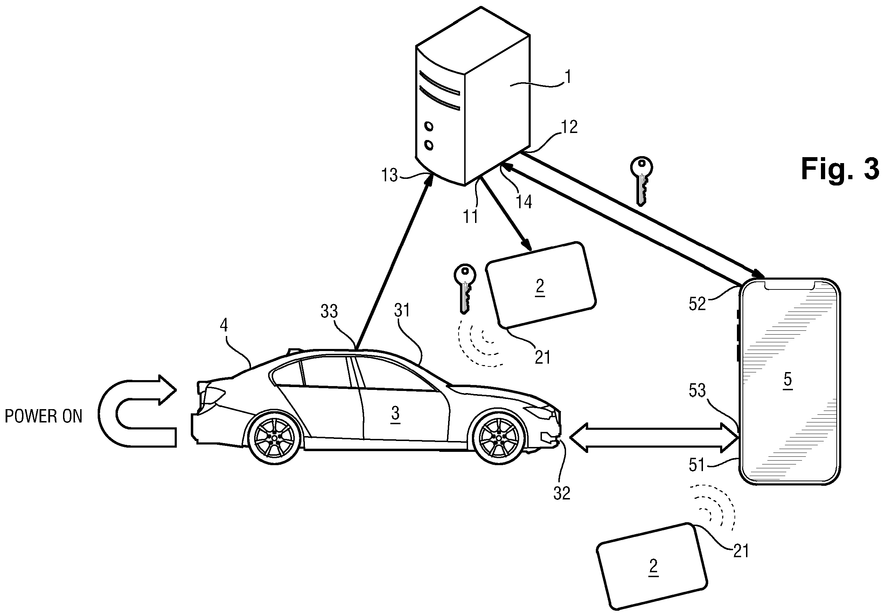

En référence aux figures 2 et 3, l'unité de contrôle 3 comprend :
- une première interface de communication 31 ;
- une deuxième interface de communication 32 ; et
- une première mémoire (non représentée sur les figures).

La première et la deuxième interface 31, 32 sont configurées en émetteur (selon la terminologie anglosaxonne « *Poller* ») et/ou en récepteur (selon la terminologie anglosaxonne « *Listener* ») dans un mode de communication en champ proche, par exemple NFC (selon la terminologie anglosaxonne « *NFC reader* ») ou Bluetooth, respectivement avec un dispositif 2 et un terminal utilisateur 5.

L'homme du métier se réfèrera aux documents suivants *NFC Analog Technical Specification 2.1 - NFC Forum, NFC Digital Protocol Technical Specification 2.1* ainsi qu'au document *Digital Key Release 3, Technical Specification 1.1.0 - Car Connectivity Consortium* pour paramétrer et dimensionner la première interface de communication 31 et la deuxième interface de communication 32.

Par exemple, en récepteur, la première interface 31 est configurée pour recevoir du dispositif 2 un premier secret et un identifiant propre du dispositif 2. En émetteur, la première interface 31 est configurée pour transmettre au dispositif 2 un identifiant propre au véhicule 4.

En outre, la deuxième interface 32 de communication est configurée pour établir un canal de communication sécurisé entre l'unité de contrôle 3 du véhicule 4 et le terminal utilisateur 5. L'établissement du canal sécurisé peut par exemple suivre un protocole de sécurité de type SPAKE2+ au moyen du premier secret transmis à l'unité de contrôle 3 du véhicule 4, par exemple un vérificateur de mot de passe configuré pour autoriser l'établissement du canal sécurisé entre le terminal 5 et l'unité de contrôle 3 du véhicule 4 à condition qu'un mot de passe candidat transmis par le terminal utilisateur 5 à l'unité de contrôle 3 du véhicule 4 corresponde à un second secret, par exemple un mot de passe d'appairage, préalablement transmis au terminal utilisateur 5 par un système 1.

L'homme du métier se réfèrera aux documents *Network Working Groupe Internet Draft : SPAKE2+, an Augmented SPAKE, draft-bar-cfrg-spake2plus-00, March 9, 2020,* et *Digital Key Release 3, Technical Specification 1.1.0 - Car Connectivity Consortium* pour paramétrer l'établissement du canal de communication sécurisé.

L'unité de contrôle 3 du véhicule 4 peut comprendre en outre une troisième interface de communication 33 configurée pour transmettre l'identifiant propre au véhicule 4 et l'identifiant propre au dispositif 2 au système 1.

La mémoire de l'unité de contrôle 3 du véhicule 4 est configurée pour stocker des données, par exemple le premier secret. En particulier la mémoire de l'unité de contrôle 3 du véhicule 4 est configurée pour stocker le vérificateur de mot de passe transmis par le dispositif 2. De plus, la mémoire de l'unité de contrôle 3 du véhicule 4 est configurée pour stocker l'identifiant propre au véhicule 4 et l'identifiant propre au dispositif 2.

Le dispositif 2 peut être une carte à puce comprenant au moins :
- une deuxième mémoire (non représentée sur les figures) ; et
- une interface de communication 21.

L'interface de communication 21 du dispositif 2 comprend un module NFC, et une bobine d'antenne. La bobine d'antenne présente un ou plusieurs enroulements coaxiaux coplanaires parallèles au plan de la carte, et par conséquent présente un axe magnétique perpendiculaire au plan de la carte. L'interface de communication 21 du dispositif 2 est configurée pour effectuer une communication NFC (sans contact en champs proche) avec un terminal NFC externe, par exemple le terminal utilisateur 5 (par exemple un téléphone intelligent ou smartphone en terminologie anglo-saxonne) par la bobine d'antenne. Lorsque la carte à puce (le dispositif 2) et le terminal NFC externe (terminal utilisateur 5) sont placés suffisamment près l'un de l'autre, la bobine d'antenne de la carte est couplée inductivement à une bobine d'antenne du terminal NFC externe (terminal utilisateur 5), et des données peuvent être échangées en utilisant des techniques NFC classiques telles que celles définies par les normes ISO 14443, ISO 15693. À cet effet, la bobine d'antenne de la carte à puce est associée à des composants passifs (ex. condensateurs) pour former un circuit d'antenne accordé à une fréquence de fonctionnement du terminal NFC externe (terminal utilisateur 5), par exemple 13,56 MHz.

Selon d'autres modes de réalisation, l'interface de communication 21 peut comprendre l'un des éléments suivants :
- un module Bluetooth ;
- un module électronique configuré pour échanger des données avec le terminal NFC externe, par exemple le terminal utilisateur 5, lorsqu'il y a un contact entre le terminal externe et l'interface de communication 21 selon la norme ISO7816-2:2017 d'Octobre 2017 ou la norme ISO7810:2019 de Décembre 2019 ;
- un motif, par exemple un code barre ou un QR code (pour « Quick response » en terminologie anglo-saxonne), affiché par le dispositif 2.

Selon un mode de réalisation, l'interface de communication 21 du dispositif 2 est configurée pour transmettre le premier secret à l'unité de contrôle 3 du véhicule 4 via une communication NFC. Par exemple, l'interface de communication 21 du dispositif 2 est configurée pour transmettre le vérificateur de mot de passe à l'unité de contrôle 3 du véhicule 4.

Selon un autre mode de réalisation, l'interface de communication 21 du dispositif 2 est configurée pour transmettre le premier secret, par exemple le vérificateur de mot de passe, par une lecture optique, par l'unité de contrôle 3 du véhicule 4, d'un motif représentatif du premier secret et affiché par le dispositif 2, le motif étant par exemple un code barre ou un QR code.

L'interface de communication 21 du dispositif 2 est en outre configurée pour transmettre un premier identifiant à l'unité de contrôle 3 du véhicule 4 et recevoir un second identifiant par l'unité de contrôle 3 du véhicule 4. Le premier identifiant et le second identifiant étant, respectivement, l'identifiant propre au dispositif 2 et l'identifiant propre au véhicule 4.

Selon un mode de réalisation, l'interface de communication 21 du dispositif 2 est configurée pour transmettre le premier identifiant et le deuxième identifiant au terminal utilisateur 5 par une communication en champ proche. Le premier identifiant étant propre au dispositif 2 et le deuxième identifiant étant propre au véhicule 4.

Selon un autre mode de réalisation, l'interface de communication 21 du dispositif 2 est configurée pour transmettre le premier identifiant et le deuxième identifiant au terminal utilisateur 5 par une lecture optique, par le terminal 5, d'un motif représentatif du premier identifiant et du deuxième identifiant et affichés par le dispositif 2, le motif étant par exemple un code barre ou un QR code.

La mémoire du dispositif 2 est configurée pour stocker des données, par exemple le premier secret. En particulier la mémoire du dispositif 2 est configurée pour stocker le vérificateur de mot de passe transmis par l'interface de communication 21 du dispositif 2 à l'unité de contrôle 3 du véhicule 4. De plus, la mémoire est configurée pour stocker le premier identifiant propre au dispositif 2 et le deuxième identifiant propre au véhicule 4.

Le terminal utilisateur 5 comprend au moins :
- une troisième mémoire (non représentée) ;
- une interface de communication 51 ;
- une interface de communication 52 ; et
- une interface de communication 53 ;

Le terminal utilisateur 5 peut être un terminal mobile, par exemple de type « smartphone », ou bien un terminal fixe, par exemple un ordinateur.

Selon un mode de réalisation, l'interface de communication 51 du terminal utilisateur 5 est configurée pour recevoir le premier identifiant et le deuxième identifiant transmis par le dispositif 2 par une communication en champ proche, par exemple de type NFC ou Bluetooth. Le premier identifiant étant propre au dispositif 2 et le deuxième identifiant étant propre au véhicule 4.

Selon un autre mode de réalisation, l'interface de communication 51 du terminal 5 est configurée pour recevoir le premier identifiant et le deuxième identifiant transmis par le dispositif 2 par une lecture optique, par le terminal utilisateur 5, d'un motif représentatif du premier identifiant et du deuxième identifiant et affichés par le dispositif 2, le motif étant par exemple un code barre ou un QR code.

La deuxième interface de communication 52 du terminal utilisateur 5 est configurée pour échanger des données avec le système 1. Selon un mode de réalisation, l'interface de communication 52 du terminal 5 est configurée pour envoyer le premier identifiant et le deuxième identifiant au système 1 par une radiocommunication, par exemple de type GSM (pour « Global System for Mobile communication » en terminologie anglo-saxonne) et recevoir le deuxième secret transmis par le système 1 par radiocommunication.

La troisième interface de communication 53 du terminal utilisateur 5 est configurée pour échanger des données avec l'unité de contrôle 3 du véhicule 4, par une communication en champ proche, par exemple de type NFC ou Bluetooth. Par exemple, la troisième interface de communication 53 du terminal utilisateur 5 est configurée pour transmettre le deuxième secret à l'unité de contrôle du véhicule 4.

Les interfaces de communication 51 et 53 sont en outre configurées pour échanger des données avec l'unité de contrôle 3 du véhicule 4, et transmettre des données au lecteur interne 6.

La mémoire du terminal utilisateur 5 est configurée pour stocker des données, par exemple le deuxième secret. En particulier, la mémoire est configurée pour stocker le mot de passe d'appairage transmis par le système 1. De plus, la mémoire du terminal utilisateur 5 est configurée pour stocker le premier identifiant et le deuxième identifiant.

Le terminal utilisateur 5 peut comprendre un produit programme d'ordinateur, par exemple une application pour téléphone portable, comprenant des instructions de code exécutées par un processeur du terminal utilisateur 5 configuré pour commander les interfaces de communication 51, 52, 53 du terminal utilisateur 5 et la troisième mémoire du terminal utilisateur 5.

Le premier secret et le deuxième secret, par exemple, respectivement, le vérificateur de mot de passe et le mot de passe d'appairage, sont transmis par le système 1 comprenant :
- une base de données configurée pour enregistrer initialement un identifiant de référence propre au véhicule 4, les premier et deuxième secrets associés à l'identifiant de référence propre au véhicule 4, puis enregistrer l'identifiant propre au dispositif 2 et l'associer à l'identifiant de référence propre au véhicule 4, lorsque l'identifiant propre au dispositif 2 accompagné de l'identifiant propre au véhicule 4 sont transmis par l'unité de contrôle 3 du véhicule 4 et que l'identifiant propre au véhicule 4 corresponde à l'identifiant de référence propre au véhicule 4 enregistré dans la base de donnée, ; et
- un serveur comprenant :
- une interface de communication 11 configurée pour transmettre le premier secret au dispositif 2 ; et
- une deuxième interface de communication 12 configurée pour transmettre le deuxième secret au terminal utilisateur 5 à condition qu'il existe une correspondance, dans la base de données, entre les identifiants de référence propre au véhicule 4 et propre au dispositif 2 qui y sont mémorisés, et, respectivement, les identifiant propre au véhicule 4 (deuxième identifiant) et propre au dispositif 2 (premier identifiant) transmis par le terminal 5 au système 1 ;
- une troisième interface de communication 13 configurée pour recevoir l'identifiant propre au véhicule 4 et l'identifiant propre au dispositif 2 transmis par l'unité de contrôle 3 du véhicule 4 ; et
- une quatrième interface de communication 14 configurée pour recevoir le premier identifiant et le deuxième identifiant transmis par le terminal utilisateur 5.

Le système 1 peut comprendre en outre plusieurs serveurs interconnectées.

Le deuxième secret peut être un mot de passe d'appairage pouvant être reconnu par le vérificateur de mot de passe.

### Procédé

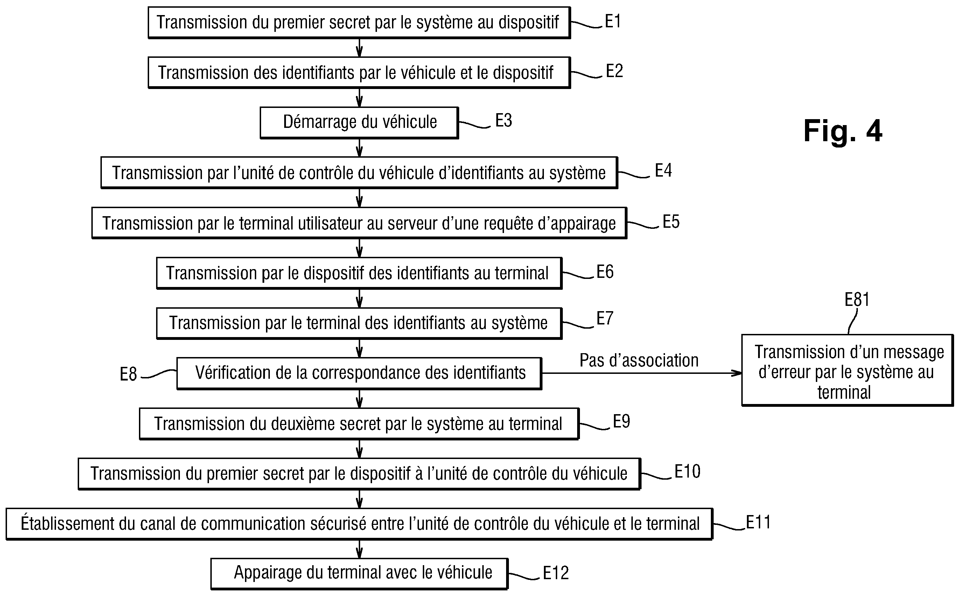

En référence à la figure 4, un procédé conjointement mis en œuvre par le système 1, l'unité de contrôle 3 du véhicule 4, le dispositif 2 et le terminal utilisateur 5 comprend les étapes suivantes.

Au cours d'une étape E1, le système 1 transmet le premier secret au dispositif 2.

Au cours d'une étape E2, le dispositif 2 transmet l'identifiant propre au dispositif 2 à l'unité de contrôle 3 du véhicule 4 et l'unité de contrôle 3 du véhicule 4 transmet l'identifiant propre au véhicule 4 au dispositif 2.

Au cours d'une étape E3, le véhicule 4 est démarré pour la première fois.

Au cours d'une étape E4, le système 1 reçoit l'identifiant propre au dispositif 2 et l'identifiant propre au véhicule 4 transmis par l'unité de contrôle 3 du véhicule 4 et vérifie l'existence d'une correspondance dans la base de données entre l'identifiant propre au véhicule 4 reçu et l'identifiant de référence propre au véhicule 4 mémorisé dans la base de données. En cas de correspondance, l'identifiant propre au dispositif 2 reçu est mémorisé dans la base de données pour l'associer à l'identifiant de référence propre au véhicule 4.

Au cours d'une étape E5, un usager du véhicule 4 envoie une requête au système 1 afin de démarrer une tentative d'appairage du terminal utilisateur 5 au véhicule 4, par exemple par l'intermédiaire de l'application du constructeur automobile du véhicule 4.

À ce stade, le terminal utilisateur 5 demande à l'usager d'approcher le dispositif 2 du terminal utilisateur 5, par exemple en le notifiant via l'application par un message.

Au cours d'une étape E6, le dispositif 2 transmet l'identifiant propre au dispositif 2 et l'identifiant propre au véhicule 4 au terminal utilisateur 5 via une communication sans fil nécessitant une proximité entre le dispositif 2 et le terminal utilisateur 5, par exemple par une communication en champ proche (NFC), ou d'une lecture optique par le terminal utilisateur 5 d'un motif représentatif des identifiants et affichés par le dispositif 2, le motif étant par exemple un code barre ou un QR code.

Au cours d'une étape E7, le terminal utilisateur 5 transmet l'identifiant propre au dispositif 2 et l'identifiant propre véhicule 4 au système 1.

Au cours d'une étape E8, la système 1 vérifie l'existence d'une correspondance, dans la base de données, entre les identifiants de référence propre au véhicule 4 et propre au dispositif 2 qui y sont mémorisés, et, respectivement, les identifiant propre au véhicule 4 et propre au dispositif 2 transmis par le terminal 5 au système1 à l'étape E7.

Dans le cas où la correspondance existe, le système transmet au cours d'une étape E9 le deuxième secret associé au couple d'identifiants mémorisé dans la base de données au terminal utilisateur 5.

Puis, au cours d'une étape E10, le dispositif 2 transmet le premier secret à l'unité de contrôle 3 du véhicule 4 via une communication sans fil nécessitant une proximité entre le dispositif 2 et l'unité de contrôle 3, par exemple par une communication en champ proche (NFC), ou d'une lecture optique par l'unité de contrôle 3 du véhicule 4 d'un motif représentatif du premier secret et affiché par le dispositif 2, le motif étant par exemple un code barre ou un QR code.

On peut prévoir que le dispositif 2 transmette le premier secret à l'unité de contrôle 3 du véhicule 4 plus tôt, par exemple après le démarrage du véhicule (étape E3).

Le premier secret peut par exemple être le vérificateur de mot de passe et le deuxième secret le mot de passe d'appairage. En l'espèce, le terminal utilisateur 5 transmet à l'unité de contrôle 3 du véhicule 4 via une communication en champ proche (par exemple Bluetooth ou NFC) un mot de passe candidat, le vérificateur de mot de passe autorisant ainsi l'établissement du canal de communication sécurisé entre le terminal 5 et l'unité de contrôle 3 du véhicule 4 à condition que le mot de passe candidat transmis par le terminal utilisateur 5 à l'unité de contrôle 3 du véhicule 4 corresponde au mot de passe d'appairage transmis par le système 1 au terminal utilisateur 5.

Si le vérificateur de mot de passe donne son autorisation, le canal de communication sécurisé entre l'unité de contrôle 3 du véhicule 4 et le terminal utilisateur 5 est établi au cours d'une étape E11.

Au cours d'une étape E12, l'usager est invité, par exemple en recevant une notification sur son terminal 5 à appairer son terminal 5 au véhicule 4. Il peut par exemple poser à proximité du lecteur interne 6 du véhicule 4 son terminal 5 pour procéder à l'appairage. Par appairage, on entend une procédure de génération, partage et mémorisation de clés cryptographiques entre l'unité de contrôle 3 du véhicule 4 et le terminal utilisateur 5, par l'intermédiaire du canal de communication sécurisé, afin de permettre au terminal utilisateur 5 de pouvoir interagir avec le véhicule 4 (par exemple permettre au terminal utilisateur 5 de pouvoir commander différents organes d'un véhicule, par exemple, une ouverture des portes, ou bien un démarrage du moteur).

Le terminal utilisateur 5 est appairé au véhicule 4.

L'usager peut alors interagir avec les différents organes du véhicule 4 en communication en champ proche. Par exemple, il peut rapprocher son terminal utilisateur 5 ou son dispositif 2 de la poignée pour déverrouiller les portes du véhicule 4 puis, lorsqu'il prend place dans l'habitacle, il peut placer son terminal 5 dans le lecteur interne 6 du véhicule 4 pour démarrer le moteur.

Dans le cas où la correspondance n'existe pas, le système 1 transmet, au cours d'une étape E81, au terminal utilisateur 5 un message d'erreur au lieu du deuxième secret, le message d'erreur indiquant que le terminal utilisateur 5 n'est pas autorisé à communiquer avec le véhicule 4, ou d'initier la mise en place d'un canal sécurisé.

## Revendications

1. Procédé d'initialisation d'une connexion sécurisée comprenant :
- transmission d'un premier secret par un système (1) à un dispositif (2),
- transmission d'un deuxième secret par le système (1) à un terminal utilisateur (5), à condition qu'un identifiant propre au dispositif (2) transmis par une unité de contrôle (3) d'un véhicule (4) au système (1) et un identifiant de référence propre au véhicule (4) mémorisés dans une base de données du système (1) sont identiques respectivement à un premier identifiant et un deuxième identifiant transmis par le terminal utilisateur (5) au système (1), le premier identifiant et le deuxième identifiant étant préalablement transmis par le dispositif (2) au terminal utilisateur (5) par une communication sans fil nécessitant une proximité entre le terminal utilisateur (5) et le dispositif (2),
- transmission par le dispositif (2) du premier secret à l'unité de contrôle (3) du véhicule (4) via une communication sans fil nécessitant une proximité entre le dispositif (2) et l'unité de contrôle (3) du véhicule (4),
- établissement d'un canal de communication sécurisé par l'unité de contrôle (3) du véhicule (4) avec le terminal utilisateur (5), à condition que le premier secret et le deuxième secret mémorisé par le terminal utilisateur (5) vérifient une condition prédéfinie.

2. Procédé selon la revendication 1, dans lequel le premier secret est un vérificateur de mot de passe configuré pour autoriser l'établissement du canal de communication sécurisé entre l'unité de contrôle (3) du véhicule (4) et le terminal utilisateur (5) à condition qu'un mot de passe candidat transmis par le terminal utilisateur (5) à l'unité de contrôle (3) du véhicule (4) corresponde au deuxième secret.

3. Procédé selon l'une des revendications 1 et 2, dans lequel la transmission du premier secret du dispositif (2) à l'unité de contrôle (3) du véhicule (4) comprend :
- une communication en champ proche (NFC), ou
- une lecture optique, par l'unité de contrôle (3) du véhicule (4), d'un motif représentatif du premier secret et affiché par le dispositif (2), le motif étant par exemple un code barre ou un QR code.

4. Procédé selon l'une des revendications 1 à 3, dans lequel le dispositif (2) est une carte à puce.

5. Ensemble pour initier une connexion sécurisée, l'ensemble comprenant un système (1), un dispositif (2) et une unité de contrôle (3) d'un véhicule (4), dans lequel :
- le système (1) est configuré pour transmettre un premier secret au dispositif (2), et configuré en outre pour transmettre un deuxième secret à un terminal utilisateur (5) à condition qu'un identifiant propre au dispositif (2) transmis par l'unité de contrôle (3) du véhicule (4) au système (1) et un identifiant de référence propre au véhicule (4) mémorisés dans une base de données du système (1) sont identiques respectivement à un premier identifiant et un deuxième identifiant transmis par le terminal utilisateur (5) au système (1), le premier identifiant et le deuxième identifiant étant préalablement transmis par le dispositif (2) au terminal utilisateur (5) par une communication sans fil nécessitant une proximité entre le terminal utilisateur (5) et le dispositif (2),
- le dispositif (2) est configuré pour transmettre le premier secret à l'unité de contrôle (3) du véhicule (4) via une communication sans fil nécessitant une proximité entre le dispositif (2) et l'unité de contrôle (3) du véhicule (4),
- l'unité de contrôle (3) du véhicule (4) est configurée pour établir un canal de communication sécurisé avec le terminal utilisateur (5), à condition que le premier secret et le deuxième secret mémorisé par le terminal utilisateur (5) vérifient une condition prédéfinie.

6. Ensemble selon la revendication 5, dans lequel le premier secret est un vérificateur de mot de passe configuré pour autoriser l'établissement du canal de communication sécurisé entre l'unité de contrôle (3) du véhicule (4) et le terminal utilisateur (5) à condition qu'un mot de passe candidat transmis par le terminal utilisateur (5) à l'unité de contrôle (3) du véhicule (4) corresponde au deuxième secret.

7. Ensemble selon l'une des revendications 5 et 6, dans lequel la transmission du premier secret du dispositif (2) à l'unité de contrôle (3) du véhicule (4) comprend :
- une communication en champ proche (NFC), ou
- une lecture optique, par l'unité de contrôle (3) du véhicule (4), d'un motif représentatif du premier secret et affiché par le dispositif (2), le motif étant par exemple un code barre ou un QR code.

8. Ensemble selon l'une des revendications 5 à 7, dans lequel le dispositif (2) est une carte à puce.

## Patentansprüche

1. Verfahren zum Aufbauen einer sicheren Verbindung, beinhaltend:
- Übertragen eines ersten Geheimnisses durch ein System (1) an eine Vorrichtung (2),
- Übertragen eines zweiten Geheimnisses durch das System (1) an ein Benutzerendgerät (5) unter der Voraussetzung, dass eine der Vorrichtung (2) eigene Kennung, die durch eine Steuereinheit (3) eines Fahrzeugs (4) an das System (1) übertragen wird, und eine dem Fahrzeug (4) eigene Referenzkennung, die in einer Datenbank des Systems (1) gespeichert sind, jeweils zu einer ersten Kennung und einer zweiten Kennung, die durch das Benutzerendgerät (5) an das System (1) übertragen werden, identisch sind, wobei die erste Kennung und die zweite Kennung vorab durch eine drahtlose Kommunikation, die eine Nähe zwischen dem Benutzerendgerät (5) und der Vorrichtung (2) erfordert, durch die Vorrichtung (2) an das Benutzerendgerät (5) übertragen werden,
- Übertragen, durch die Vorrichtung (2), des ersten Geheimnisses an die Steuereinheit (3) des Fahrzeugs (4) mittels einer drahtlosen Kommunikation, die eine Nähe zwischen der Vorrichtung (2) und der Steuereinheit (3) des Fahrzeugs (4) erfordert,
- Herstellen eines sicheren Kommunikationskanals durch die Steuereinheit (3) des Fahrzeugs (4) mit dem Benutzerendgerät (5) unter der Voraussetzung, dass das erste Geheimnis und das durch das Benutzerendgerät (5) gespeicherte zweite Geheimnis eine vordefinierte Bedingung erfüllen.

2. Verfahren nach Anspruch 1, wobei das erste Geheimnis ein Passwortprüfer ist, der dazu konfiguriert ist, die Herstellung des sicheren Kommunikationskanals zwischen der Steuereinheit (3) des Fahrzeugs (4) und dem Benutzerendgerät (5) unter der Voraussetzung zu genehmigen, dass ein potenzielles Passwort, das durch das Benutzerendgerät (5) an die Steuereinheit (3) des Fahrzeugs (4) übertragen wird, dem zweiten Geheimnis entspricht.

3. Verfahren nach einem der Ansprüche 1 und 2, wobei die Übertragung des ersten Geheimnisses der Vorrichtung (2) an die Steuereinheit (3) des Fahrzeugs (4) Folgendes beinhaltet:
- eine Nahfeldkommunikation (NFC) oder
- das optische Lesen, durch die Steuereinheit (3) des Fahrzeugs (4), eines Musters, das für das erste Geheimnis repräsentativ ist und durch die Vorrichtung (2) angezeigt wird, wobei das Muster beispielsweise ein Strichcode oder ein QR-Code ist.

4. Verfahren nach einem der Ansprüche 1 bis 3, wobei die Vorrichtung (2) eine Chipkarte ist.

5. Anordnung zum Aufbauen einer sicheren Verbindung, wobei die Anordnung ein System (1), eine Vorrichtung (2) und eine Steuereinheit (3) eines Fahrzeugs (4) beinhaltet, wobei:
- das System (1) dazu konfiguriert ist, ein erstes Geheimnis an die Vorrichtung (2) zu übertragen, und ferner dazu konfiguriert ist, ein zweites Geheimnis an ein Benutzerendgerät (5) unter der Voraussetzung zu übertragen, dass eine der Vorrichtung (2) eigene Kennung, die durch die Steuereinheit (3) des Fahrzeugs (4) an das System (1) übertragen wird, und eine dem Fahrzeug (4) eigene Referenzkennung, die in einer Datenbank des Systems (1) gespeichert sind, jeweils zu einer ersten Kennung und einer zweiten Kennung, die durch das Benutzerendgerät (5) an das System (1) übertragen werden, identisch sind, wobei die erste Kennung und die zweite Kennung vorab durch eine drahtlose Kommunikation, die eine Nähe zwischen dem Benutzerendgerät (5) und der Vorrichtung (2) erfordert, durch die Vorrichtung (2) an das Benutzerendgerät (5) übertragen werden,
- die Vorrichtung (2) dazu konfiguriert ist, das erste Geheimnis mittels einer drahtlosen Kommunikation, die eine Nähe zwischen der Vorrichtung (2) und der Steuereinheit (3) des Fahrzeugs (4) erfordert, an die Steuereinheit (3) des Fahrzeugs (4) zu übertragen,
- die Steuereinheit (3) des Fahrzeugs (4) dazu konfiguriert ist, einen sicheren Kommunikationskanal mit dem Benutzerendgerät (5) unter der Voraussetzung herzustellen, dass das erste Geheimnis und das durch das Benutzerendgerät (5) gespeicherte zweite Geheimnis eine vordefinierte Bedingung erfüllen.

6. Anordnung nach Anspruch 5, wobei das erste Geheimnis ein Passwortprüfer ist, der dazu konfiguriert ist, die Herstellung des sicheren Kommunikationskanals zwischen der Steuereinheit (3) des Fahrzeugs (4) und dem Benutzerendgerät (5) unter der Voraussetzung zu genehmigen, dass ein potenzielles Passwort, das durch das Benutzerendgerät (5) an die Steuereinheit (3) des Fahrzeugs (4) übertragen wird, dem zweiten Geheimnis entspricht.

7. Anordnung nach einem der Ansprüche 5 und 6, wobei die Übertragung des ersten Geheimnisses der Vorrichtung (2) an die Steuereinheit (3) des Fahrzeugs (4) Folgendes beinhaltet:
- eine Nahfeldkommunikation (NFC) oder
- das optische Lesen, durch die Steuereinheit (3) des Fahrzeugs (4), eines Musters, das für das erste Geheimnis repräsentativ ist und durch die Vorrichtung (2) angezeigt wird, wobei das Muster beispielsweise ein Strichcode oder ein QR-Code ist.

8. Anordnung nach einem der Ansprüche 5 bis 7, wobei die Vorrichtung (2) eine Chipkarte ist.

## Claims

1. Method for initializing a secure connection, comprising:
- transmission of a first secret by a system (1) to a device (2),
- transmission of a second secret by the system (1) to a user terminal (5), provided that an identifier specific to the device (2) transmitted by a control unit (3) of a vehicle (4) to the system (1) and a reference identifier specific to the vehicle (4) stored in a database of the system (1) are identical to a first identifier and second identifier transmitted by the user terminal (5) to the system (1), respectively, the first identifier and second identifier being transmitted beforehand by the device (2) to the user terminal (5) via a wireless communication requiring proximity between the user terminal (5) and the device (2),
- transmission by the device (2) of the first secret to the control unit (3) of the vehicle (4) via a wireless communication requiring proximity between the device (2) and the control unit (3) of the vehicle (4),
- set-up of a secure communication channel by the control unit (3) of the vehicle (4) with the user terminal (5), provided that the first secret and the second secret stored by the user terminal (5) satisfy a predefined condition.

2. Method according to Claim 1, wherein the first secret is a password checker configured to permit set-up of the secure communication channel between the control unit (3) of the vehicle (4) and the user terminal (5) provided that a candidate password transmitted by the user terminal (5) to the control unit (3) of the vehicle (4) matches the second secret.

3. Method according to either of Claims 1 and 2, wherein transmission of the first secret from the device (2) to the control unit (3) of the vehicle (4) comprises:
- near-field communication (NFC), or
- optical read-out, by the control unit (3) of the vehicle (4), of a pattern representative of the first secret and displayed by the device (2), the pattern for example being a bar code or a QR code.

4. Method according to any of Claims 1 to 3, wherein the device (2) is a chip card.

5. Assembly for initializing a secure connection, the assembly comprising a system (1), a device (2) and a control unit (3) of a vehicle (4), wherein:
- the system (1) is configured to transmit a first secret to the device (2), and further configured to transmit a second secret to a user terminal (5), provided that an identifier specific to the device (2) transmitted by the control unit (3) of the vehicle (4) to the system (1) and a reference identifier specific to the vehicle (4) stored in a database of the system (1) are identical to a first identifier and second identifier transmitted by the user terminal (5) to the system (1), respectively, the first identifier and second identifier being transmitted beforehand by the device (2) to the user terminal (5) via a wireless communication requiring proximity between the user terminal (5) and the device (2),
- the device (2) is configured to transmit the first secret to the control unit (3) of the vehicle (4) via a wireless communication requiring proximity between the device (2) and the control unit (3) of the vehicle (4),
- the control unit (3) of the vehicle (4) is configured to set up a secure communication channel with the user terminal (5), provided that the first secret and the second secret stored by the user terminal (5) satisfy a predefined condition.

6. Assembly according to Claim 5, wherein the first secret is a password checker configured to permit set-up of the secure communication channel between the control unit (3) of the vehicle (4) and the user terminal (5) provided that a candidate password transmitted by the user terminal (5) to the control unit (3) of the vehicle (4) matches the second secret.

7. Assembly according to either of Claims 5 and 6, wherein transmission of the first secret from the device (2) to the control unit (3) of the vehicle (4) comprises:
- near-field communication (NFC), or
- optical read-out, by the control unit (3) of the vehicle (4), of a pattern representative of the first secret and displayed by the device (2), the pattern for example being a bar code or a QR code.

8. Assembly according to any of Claims 5 to 7, wherein the device (2) is a chip card.
